# EUROPÄISCHE PATENTSCHRIFT

(11) **EP 0 523 276 B1**
(45) Veröffentlichungstag und Bekanntmachung des Hinweises auf die Patenterteilung: **03.04.1996**
(21) Anmeldenummer: 91112113.5
(22) Anmeldetag: 19.07.1991
(51) Int. Cl.: H04L 12/56

(54) **Verfahren und Schaltungsanordnung zum Einrichten von virtuellen Verbindungen über ein ATM-Verbindungsleitungsbündel**
Method and circuit for arranging virtual circuits over a bundle of ATM-connecting lines
Procédé et circuit pour arranger des liaisons virtuelles à travers un faisceau de lignes de liaison-ATM (mode de transfert asynchrone)

(43) Veröffentlichungstag der Anmeldung: 20.01.1993
(73) Patentinhaber: SIEMENS AKTIENGESELLSCHAFT, D-80333 München (DE)
(72) Erfinder: Wallmeier, Eugen, Dr.rer.nat., W-8000 München 70 (DE); Hofstetter, Helga, W-8000 München 40 (DE)

(56) Entgegenhaltungen:
- EP-A- 0 398 037
- EP-A- 0 411 674
- IEEE INTERNATIONAL CONFERENCE ON COMMUNICATIONS ICC ' 90 Bd. 2, 15. April 1990, ATLANTA , US Seiten 439 - 442; W. WANG ET AL.: 'Bandwidth allocation for ATM Networks'
- IEEE INTERNATIONAL CONFERENCE ON COMMUNICATIONS ICC '89 Bd. 1, 11. Juni 1989, BOSTON , US Seiten 415 - 422; P. JOOS ET AL.: 'A statistical bandwidth allocation and usage monitoring algorithm for ATM networks'
- IEEE TRANSACTIONS ON COMMUNICATIONS Bd. 38, Nr. 8, August 1990, NEW YORK US Seiten 1212 - 1222; K-I. SATO ET AL.: 'Broad-Band ATM Network Architecture Based on Virtual Paths'

## Beschreibung

Die Erfindung betrifft ein Verfahren und eine Schaltungsanordnung gemäß Oberbegriff des Patentanspruches 1 bzw. des Patentanspruches 7.

Im Zuge des Aufbaues von virtuellen Verbindungen in einem nach einem asynchronen Transfermodus ("asynchronous transfer mode", ATM) arbeitenden ATM-Vermittlungsnetz erfolgt innerhalb der einzelnen ATM-Vermittlungseinrichtungen jeweils eine gesonderte Wegesuche, um über das der jeweiligen ATM-Vermittlungseinrichtung zugehörige Koppelfeld einen geeigneten Weg für die jeweilige virtuelle Verbindung festzulegen. Bei einem mehrstufigen Koppelfeld, dessen einzelne Koppelelemente über interne ATM-Zwischenleitungen miteinander verbunden sind, geschieht eine solcne Wegesuche nach Maßgabe der für die jeweilige virtuelle Verbindung angemeldeten Bitrate und nach Maßgabe der auf den einzelnen ATM-Zwischenleitungen momentan noch verfügbaren Bitratenübertragungskapazitäten.

Durch die ältere europäische Patentanmeldung EP-A-0 447 841 ist, veröffentlicht am 25. September 1991, bereits ein Verfahren zum Einrichten von virtuellen Verbindungen über nach einem asynchronen Transfermodus arbeitende, mehrstufige ATM-Koppelfelder umfassende ATM-Vermittlungseinrichtungen vorgeschlagen worden. Bei diesem Verfahren werden einerseits die einzelnen virtuellen Verbindungen nach Maßgabe der angemeldeten Bitraten-Grenzwerte Verbindungs-Bitratenklassen, die sich auf Größenbereiche dieser Bitraten-Grenzwerte beziehen, und andererseits die auf den ATM-Zwischenleitungen jeweils noch verfügbaren freien Übertragungskapazitäten übertragungs-Bitratenklassen mit entsprechenden Übertragungsbitraten-Grenzwerten zugeordnet. Die von einem der Koppelemente eines ATM-Koppelfeldes jeweils ausgehenden und/oder zu einem solchen Koppelelement hinführenden ATM-Zwischenleitungen werden dabei zu einer ATM-Zwischenleitungsgruppe zusammengefaßt. In der jeweiligen ATM-Vermittlungseinrichtung ist darüber hinaus ein ATM-Zwischenleitungs-Belegungsspeicher vorgesehen, in welchem für jede der ATM-Zwischenleitungsgruppen eine Schar von Speicherelementen mit jeweils einer Mehrzahl von Speicherplätzen reserviert ist. Dabei ist jedes der Speicherelemente einer bestimmten Verbindungs-Bitratenklasse bzw. Übertragungs-Bitratenklasse und innerhalb des jeweiligen Speicherelementes jeder der Speicherplätze einer der an das jeweilige Koppelelement angeschlossenen ATM-Zwischenleitungen zugeordnet. Die einzelnen Speicherplätze eines Speicherelementes sind bei Vorhandensein einer freien Übertragungskapazität auf der zugeordneten ATM-Zwischenleitung für die dem jeweiligen Speicherelement zugeordnete Übertragungs-Bitratenklasse binär gekennzeichnet. Für das Einrichten einer neuen virtuellen Verbindung über eine der Anzahl der Koppelstufen entsprechende Anzahl von ATM-Zwischenleitungen wird zu jeder für die betreffende virtuelle Verbindung in Frage kommenden ATM-Zwischenleitungsgruppen ein Speicherelement angesteuert, welches der der einzurichtenden virtuellen Verbindung zugeordneten Verbindungs-Bitratenklasse entspricht. Im Zuge eines innerhalb der gerade angesteuerten Speicherelemente hinsichtlich der Reihenfolge in gleicher Weise festgelegten Abfragevorganges werden dann für die einzurichtende virtuelle Verbindung diejenigen ATM-Zwischenleitungen ausgewählt, deren zugeordnete Speicherplätze eine Koinzidenz hinsichtlich ihrer binären Kennzeichnung aufweisen.

Neben einer solchen internen Wegesuche innerhalb einer ATM-Vermittlungseinrichtung ist für den Fall, daß innerhalb eines ATM-Vermittlungsnetzes zwischen ATM-Kommunikationseinrichtungen nicht nur einzelne ATM-Einzelverbindungsleitungen, sondern aus einer Mehrzahl von ATM-Einzelverbindungsleitungen gebildete externe ATM-Verbindungsleitungsbündel vorgesehen sind, zusätzlich für eine einzurichtende virtuelle Verbindung eine der ATM-Einzelverbindungsleitungen des in Frage kommenden ATM-Verbindungsleitungsbündels auszuwählen. Eine solche Auswahl erfolgt vor der erwähnten internen Wegesuche innerhalb der jeweiligen ATM-Vermittlungseinrichtung.

Weiterhin ist es aus "IEEE Transactions on Communications", 38 (1990) August, Nr. 8, New York, USA, Seiten 1212 - 1222, Sato et al.:"Broad-Band ATM-Network Architecture Based on Virtual Paths" bekannt, in nach einem asynchronen Transfermodus (ATM) arbeitenden, eine Mehrzahl von miteinander verbundenen ATM-Kommunikationseinrichtungen aufweisenden Netzen virtuelle Verbindungen in sog. virtuellen Pfaden über ATM-Verbindungsleitungen zu führen. Diesen virtuellen Pfaden wird jeweils eine bestimmte Bandbreite zugeordnet. Bei Vorliegen eines Wunsches für das Einrichten einer virtuellen Verbindung wird zunächst der in Frage kommende virtuelle Pfad ermittelt und anschließend nach Maßgabe der in dem jeweiligen virtuellen Pfad bereits durch bestehende virtuelle Verbindungen belegten Bandbreite entschieden, ob bei dem für die gerade gewünschte virtuelle Verbindung geforderten Dienst und der damit benötigten Bandbreite diese virtuelle Verbindung einzurichten oder abzuweisen ist.

Darüber hinaus ist es im Zusammenhang mit der Führung von virtuellen Verbindungen in virtuellen Pfaden eines ATM-Netzes aus "IEEE International Conference on Communications ICC'90", Band 2, 15. April 1990, Atlanta, USA, Seiten 439 - 442, W. Wang et al.:"Bandwidth Allocation for ATM-Networks" bekannt, daß den einzelnen virtuellen Pfaden jeweils eine bestimmte Bandbreite auf unterschiedliche Weise zugeordnet werden kann. So sind eine statische Zuordnung, eine Zuordnung von Bandbreite in festen Schritten sowie eine dynamische Zuordnung aufgeführt. Nach Zuordnung der jeweiligen Bandbreite erfolgt auch hier bei Vorliegen eines Verbindungswunsches eine Überprüfung, ob im Hinblick auf die bereits durch eingerichtete virtuelle Verbindungen belegte Bandbreite in dem in Frage kommenden virtuellen Pfad die gerade gewünschte virtuelle Verbindung noch eingerichtet werden kann oder nicht.

In den beiden zuletzt genannten Dokumenten wird jedoch nicht näher darauf eingegangen, wie für virtuelle Verbindungen innerhalb eines ATM-Verbindungsleitungsbündels geeignete ATM-Einzelverbindungsleitungen ausgewählt werden können.

Es ist nun Aufgabe der vorliegenden Erfindung, einen Weg zu zeigen, wie ein Verfahren und eine Schaltungsanordnung gemäß Oberbegriff des Patentanspruches 1 bzw. des Patentanspruches 7 ausgebildet werden können, um für virtuelle Verbindungen innerhalb eines ATM-Verbindungsleitungsbündels geeignete ATM-Einzelverbindungsleitungen mit einem geringen Steueraufwand auswählen zu können.

Die Erfindung löst die Aufgabe bei einem Verfahren gemäß Oberbegriff des Patentanspruches 1 durch die in diesem Patentanspruch angegebenen Verfahrensmerkmale. Die Erfindung bringt dabei den Vorteil mit sich, daß die im Zuge des Aufbaus einer virtuellen Verbindung für die Auswahl einer einem ATM-Verbindungsleitungsbündels zugehörigen ATM-Einzelverbindungsleitung erforderlichen Steuerungsvorgänge auf einfache Vergleiche der der jeweiligen virtuellen Verbindung zugeordneten Klasse mit den für die einzelnen ATM-Einzelverbindungsleitungen individuell festgehaltenen Leitungsangaben hinauslaufen und daß lediglich mit jedem Einrichten einer virtuellen Verbindung bzw. Auslösen einer eingerichteten Verbindung auf einer ATM-Einzelverbindungsleitung die Leitungsangaben entsprechend der durch dieses Einrichten bzw. Auslösen geänderten freien Bitraten-Übertragungskapazität zu aktualisieren sind.

Vorteilhafte Ausgestaltungen des Verfahrens gemäß der vorliegenden Erfindung ergeben sich aus den Patentansprüchen 2 bis 6.

Gelöst wird die vorstehend aufgezeigte Aufgabe bei einer Schaltungsanordnung gemäß Patentanspruch 7 durch die in diesem Patentanspruch angegebenen schaltungstechnischen Merkmale. Der Vorteil dieser Schaltungsanordnung besteht dabei darin, daß innerhalb des einem ATM-Verbindungsleitungsbündel zugeordneten Belegungsspeichers lediglich eine der Speicherzellen nach Maßgabe der der gerade einzurichtenden virtuellen Verbindung zugeordneten Klasse zu adressieren ist und anschließend durch Auswerten der in den einzelnen Speicherplätzen dieser Speicherzelle gespeicherten Markierungsbits eine der ATM-Einzelverbindungsleitungen zu ermitteln ist, auf der eine der bei der gerade einzurichtenden virtuellen Verbindung zu berücksichtigenden Verbindungs-Klasse entsprechende Übertragungs-Klasse zur Verfügung steht.

Im folgenden wird nun die vorliegende Erfindung anhand von Zeichnungen beispielsweise näher beschrieben.
FIG 1 zeigt ein Blockschaltbild einer ATM-Vermittlungseinrichtung, bei der die Erfindung angewandt ist, und
FIG 2 zeigt einen möglichen Aufbau der in FIG 1 schematisch dargestellten Speicheranordnung.

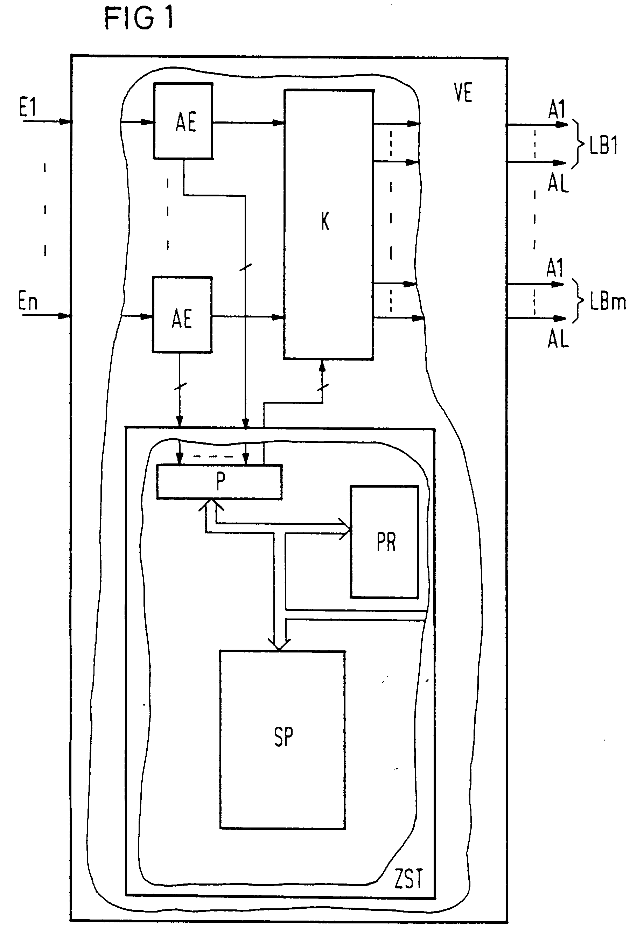

In FIG 1 ist eine ATM-Vermittlungseinrichtung VE schematisch dargestellt, an welcher eine Mehrzahl von ATM-Eingangsleitungen E1 bis En sowie eine Mehrzahl von ATM-Verbindungsleitungsbündeln LB1 bis LBm angeschlossen sind. Von diesen sind in FIG 1 lediglich die ATM-Eingangsleitungen E1 und En sowie die ATM-Verbindungsleitungsbündel LB1 und LBm angegeben. Die ATM-Verbindungsleitungsbündel mögen dabei jeweils aus einer Mehrzahl von ATM-Einzelverbindungsleitungen A1 bis AL gebildet sein.

Auf den ATM-Eingangsleitungen und ATM-Einzelverbindungsleitungen erfolgt jeweils eine Übertragung von Nachrichtenzellen im Zuge von virtuellen Verbindungen nach einem asynchronen Übertragungsverfahren ("asynchronous transfer mode ATM"). Bei den Nachrichtenzellen möge es sich dabei um Zellen fester Länge handeln, welche jeweils in bekannter Weise über einen Zellenkopf sowie einen Informationsteil verfügen. In dem Informationsteil erfolgt die Übertragung der eigentlichen Nachrichtensignale. Unter Nachrichtensignalen sollen dabei Nachrichten- und Textsignale sowie Sprach- bzw. Bildsignale in digitaler Form verstanden werden. Ein Zellenkopf enthält dagegen unter anderem eine sogenannte virtuelle Kanalnummer, durch die die jeweilige virtuelle Verbindung auf der in Frage kommenden ATM-Eingangsleitung bzw. ATM-Einzelverbindungsleitung bezeichnet ist. In Übertragungspausen werden im übrigen den Nachrichtenzellen entsprechende Leerzellen übertragen.

Von der in FIG 1 dargestellten ATM-Vermittlungseinrichtung VE sind lediglich für das Verständnis der vorliegenden Erfindung dienende Einrichtungen dargestellt. Danach ist jeder der ATM-Eingangsleitungen E1 bis En eine Auswerteeinrichtung AE zugeordnet, wobei die Auswerteeinrichtungen einerseits gemeinsam mit einer zentralen Steuereinrichtung ZST und andererseits individuell mit einem der Anschlüsse einer Koppelanordnung K in Verbindung stehen. An diese Koppelanordnung sind die zuvor erwähnten ATM-Verbindungsleitungsbündel LB1 bis LBm angeschlossen. Diese mögen dabei beispielsweise als Verbindungsleitungsbündel zu nachfolgenden ATM-Vermittlungseinrichtungen dienen.

Die Auswerteeinrichtungen AE dienen jeweils für das Überwachen des auf der zugeordneten ATM-Eingangsleitung auftretenden Zellenstromes hinsichtlich des Auftretens von Zellen, mit denen der Aufbau virtueller Verbindungen angefordert wird, und für das Weiterleiten derartiger Zellen an die zentrale Steuereinrichtung ZST. Diese zentrale Steuereinrichtung wählt dabei bei Auftreten einer derartigen Zelle unter anderem für den Fall, daß die gerade gewünschte virtuelle Verbindung über ein externes ATM-Verbindungsleitungsbündel zu führen ist, eine der zu dem betreffenden ATM-Verbindungsleitungsbündel gehörende ATM-Einzelverbindungsleitung aus. Auf die dafür erforderlichen Steuerungsvorgänge wird im folgenden noch näher eingegangen.

Darüber hinaus überprüft die zentrale Steuereinrichtung ZST nach der Auswahl einer ATM-Einzelverbindungsleitung, ob innerhalb der Koppelanordnung K für die jeweilige Verbindung noch eine ausreichende Übertragungskapazität vorhanden ist. Lediglich bei einer ausreichenden Übertragungskapazität wird eine gerade gewünschte virtuelle Verbindung eingerichtet und von der zentralen Steuereinrichtung her die Koppelanordnung K entsprechend gesteuert. Da die Arbeitsweise und die Steuerung einer derartigen Koppelanordnung bereits hinlänglich bekannt sind, wird im folgenden darauf nicht näher eingegangen. Liegt dagegen keine ausreichende Übertragungskapazität vor, so wird die gewünschte virtuelle Verbindung abgewiesen. Hierzu wird beispielsweise unter der Steuerung der zentralen Steuereinrichtung ZST eine Zelle mit einer entsprechenden Signalisierungsinformation zu derjenigen Teilnehmereinrichtung hin übertragen, von der die gerade abgewiesene virtuelle Verbindung angefordert worden ist. Auch derartige Steuerungsvorgänge im Zuge eines Verbindungsaufbaus sind bereits bekannt, so daß hierauf nicht näher eingegangen zu werden braucht.

Auch bezüglich der zentralen Steuereinrichtung ZST sind in FIG 1 lediglich für das Verständnis der vorliegenden Erfindung dienende Einrichtungen dargestellt. So weist diese einen Prozessor PR auf, welcher über ein Busleitungssystem einerseits mit einer Schnittstelleneinrichtung P und andererseits mit wenigstens einer Speicheranordnung SP verbunden ist. Die Schnittstelleneinrichtung P, die an Ausgänge der Auswerteeinrichtungen AE sowie Steuereingänge der Koppelanordnung K angeschlossen ist, dient dabei einerseits für die Übernahme der von den einzelnen Auswerteeinrichtungen gelieferten Informationen und andererseits für die Abgabe von Steuerinformationen an die Koppelanordnung K.

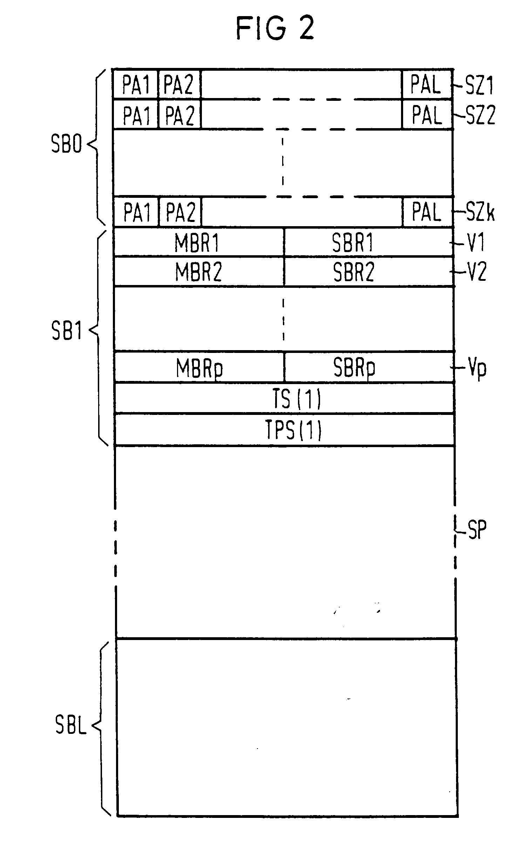

Die Speicheranordnung SP, die in FIG 2 detaillierter dargestellt ist, weist in einem ersten, mit SBO bezeichneten Speicherbereich, der beispielsweise dem in FIG 1 dargestellten ATM-Verbindungsleitungsbündel LB1 zugeordnet sein möge, eine Mehrzahl von Speicherzellen SZ1 bis SZk auf, die, wie im folgenden noch erläutert werden wird, jeweils einer von insgesamt k festgelegten Übertragungs-Klassen zugeordnet sind. Innerhalb einer solchen Speicherzelle sind insgesamt L Speicherplätze vorgesehen, die den einzelnen zu dem ATM-Verbindungsleitungsbündel LB1 zugehörigen ATM-Einzelverbindungsleitungen A1 bis AL individuell zugeordnet sind.

Die Speicheranordnung SP weist außerdem eine der Anzahl der dem ATM-Verbindungsleitungsbündel LB1 zugehörigen ATM-Einzelverbindungsleitungen A1 bis AL entsprechende Anzahl von gleich organisierten Speicherbereichen SB1 bis SBL auf, von denen lediglich der der ATM-Einzelverbindungsleitung A1 zugeordnete Speicherbereich SB1 stellvertretend für die übrigen Speicherbereiche detaillierter dargestellt ist. Diesem Speicherbereich SB1 ist eine der Anzahl der über die ATM-Einzelverbindungsleitung A1 maximal einrichtbaren virtuellen Verbindungen entsprechende Anzahl von Speicherzellen zugehörig. Bei maximal p möglichen virtuellen Verbindungen sind also, wie in FIG 2 dargestellt, p mit V1 bis Vp bezeichnete Speicherzellen für die Speicherung noch näher zu erläuternder verbindungsindividueller Parameter vorgesehen. Diese sind für die Speicherzelle V1 mit MBR1 und SBR1, für die Speicherzelle V2 mit MBR2 und SBR2 sowie für die Speicherzelle Vp mit MBRp und SBRp bezeichnet. Neben diesen verbindungsindividuellen Speicherzellen sind leitungsbezogene Speicherzellen vorgesehen, die in FIG 2 die Bezeichnung TS(1) und TPR(1) tragen. Wie im folgenden noch dargelegt werden wird, dienen die zuletzt genannten Speicherzellen für die Zwischenspeicherung von leitungsbezogenen verkehrabhängigen Variablen, nach deren Maßgabe die Zulässigkeit des Einrichtens einer neuen virtuellen Verbindung auf der hier als Beispiel angegebenen ATM-Einzelverbindungsleitung A1 überprüft wird.

An den gerade erläuterten Speicherbereich SB1 schließen sich in gleicher Weise aufgebaute Speicherbereiche SB2 bis SBL an, die den ATM-Einzelverbindungsleitungen A2 bis AL des ATM-Verbindungsleitungsbündels LB1 individuell zugeordnet sind. In diesen Speicherbereichen sind den zuvor erwähnten verbindungsindividuellen Parametern und leitungsbezogenen verkehrsabhängigen Variablen entsprechende Angaben für die genannten ATM-Einzelverbindungsleitungen gespeichert.

Die zuvor erwähnten Speicherbereiche SBO bis SBL sind, wie zuvor erläutert, dem ATM-Verbindungsleitungsbündel LB1 individuell zugeordnet. Sind, wie in FIG 1 als Beispiel dargestellt, an die dargestellte ATM-Vermittlungseinrichtung VE zusätzlich zu dem ATM-Verbindungsleitungsbündel LB1 weitere ATM-Verbindungsleitungsbündel (LB2 bis LBm) angeschlossen, so können sich an die Speicherbereiche SBO bis SBL weitere Speicherbereiche anschließen, in denen verbindungsindividuelle Parameter und leitungsbezogene verkehrsabhängige Variable in der zuvor erwähnten Weise für die weiteren ATM-Verbindungsleitungsbündel gespeichert werden können. Alternativ dazu können jedoch auch für diese weiteren ATM-Verbindungsleitungsbündel gesonderte Speicher mit den oben angegebenen Speicherbereichen entsprechenden Speicherbereichen vorgesehen sein, wobei die Speicher an das Busleitungssystem des in Figur 1 dargestellten Prozessors PR angeschlossen sind.

Nachdem zuvor der Aufbau der ATM-Vermittlungseinrichtung VE anhand der Figuren 1 und 2 erläutert worden ist, wird nunmehr auf deren Wirkungsweise näher eingegangen.

Für die Einleitung des Aufbaus einer virtuellen Verbindung über eine der Eingangsleitungen E1 bis En, die beispielsweise die Eingangsleitung E1 sein möge, werden von einer mit der Eingangsleitung E1 verbundenen rufenden Teilnehmereinrichtung her in einer Signalisierungsphase Signalisierungszellen zu der Vermittlungseinrichtung VE hin übertragen, durch welche einerseits der Aufbau einer virtuellen Verbindung angefordert und andererseits die gewünschte virtuelle Verbindung spezifiziert wird. In diesen Signalisierungszellen sind unter anderem neben Zielangaben (gewünschte gerufene Teilnehmereinrichtung) verbindungscharakteristische Parameter enthalten, aus welchen hervorgeht, in welcher Weise beabsichtigt ist, nach einem erfolgreichen Verbindungsaufbau Nachrichtenzellen zu übertragen. Bei diesen Parametern möge es sich, wie im folgenden als Beispiel angenommen,um einen Spitzenbitratenwert und um einen mittleren Bitratenwert handeln. Diese beiden Bitratenwerte dürfen durch die im Zuge einer aufgebauten Verbindung übertragenen Nachrichtenzellen nicht überschritten werden. Darüber hinaus können diese Parameter jeweils aber auch lediglich aus einem Spitzenbitratenwert oder aus einem Spitzenbitratenwert, einem mittleren Bitratenwert und einer maximalen Burstlänge bestehen.

Nach Maßgabe des für eine virtuelle Verbindung angemeldeten Spitzenbitratenwertes und des angemeldeten mittleren Bitratenwertes wird von der zentralen Steuereinrichtung ZST her einerseits überprüft, ob aufgrund der momentan noch verfügbaren Übertragungskapazität innerhalb der Koppeleinrichtung K die jeweilige virtuelle Verbindung einrichtbar ist. Andererseits wählt die zentrale Steuereinrichtung zuvor für die gerade einzurichtende virtuelle Verbindung, falls diese über ein ATM-Verbindungsleitungsbündel zu führen ist, eine der zu diesem gehörenden ATM-Einzelverbindungsleitungen aus, und zwar ebenfalls nach Maßgabe des für die jeweilige virtuelle Verbindung angemeldeten Spitzenbitratenwertes und des angemeldeten mittleren Bitratenwertes.

Auf die Auswahl einer ATM-Einzelverbindungsleitung innerhalb eines ATM-Verbindungsleitungsbündels im Zuge des Aufbaus von virtuellen Verbindungen durch die zentrale Steuereinrichtung ZST wird nun im folgenden am Beispiel des ATM-Verbindungsleitungsbündels LB1 näher eingegangen. Für die übrigen ATM-Verbindungsleitungsbündel laufen entsprechende Steuerungsvorgänge ab.

Um innerhalb eines ATM-Verbindungsleitungsbündels eine Auswahl einer ATM-Einzelverbindungsleitung mit einem geringen Steuerungsaufwand durchführen zu können, werden die für die einzelnen virtuellen Verbindungen in bestimmten Grenzen beliebig anmeldbaren Spitzenbitratenwerte und mittleren Bitratenwerte Verbindungs-Klassen zugeordnet. Diese können sich dabei in dem Spitzenbitratenwert und/oder mittleren Bitratenwert voneinander unterscheiden. Wie bereits anhand der Figur 2 erläutert worden ist, möge als Beispiel eine Mehrzahl k unterschiedlicher Verbindungs-Klassen festgelegt sein.

Darüber hinaus werden die auf den ATM-Einzelverbindungsleitungen des ATM-Verbindungsleitungsbündels LB1 aufgrund des momentanen Verkehrsaufkommens noch verfügbaren freien Übertragungskapazitäten Übertragungs-Klassen zugeordnet, die jeweils hinsichtlich ihres festgelegten Spitzenbitratenwertes und festgelegten mittleren Bitratenwertes einer der zuvor erwähnten Verbindungs-Klassen entsprechen. Jeder dieser Übertragungs-Klassen ist eine der Speicherzellen SZ1 bis SZk der in Figur 2 dargestellten Speicherandordnung SP zugeordnet. Innerhalb dieser Speicherzellen ist für jede der dem ATM-Verbindungsleitungsbündel LB1 zugehörigen ATM-Einzelverbindungsleitungen jeweils ein Speicherplatz beispielsweise in Form einer Bitstelle vorgesehen. Diese Speicherplätze sind in Figur 2 entsprechend ihrer Zuordnung zu den ATM-Einzelverbindungsleitungen A1 bis AL mit PA1 bis PAL bezeichnet. In einem solchen Speicherplatz innerhalb einer Speicherzelle ist dabei immer dann eine Markierungsinformation gespeichert, wenn auf der zugeordneten ATM-Einzelverbindungsleitung unter Berücksichtigung des momentanen Verkehrsaufkommens noch eine der jeweiligen Übertragungs-Klasse entsprechende freie Übertragungskapazität zur Verfügung steht. Bei dem zuvor angenommenen Beispiel, daß die Speicherplätze innerhalb der Speicherzellen jeweils durch eine Bitstelle realisiert sind, läuft dies also darauf hinaus, daß für eine ATM-Einzelverbindungsleitung innerhalb einer Speicherzelle (SZ1 bis SZk) dann das zugeordnete Bit auf einen festgelegten Binärwert, beispielsweise logisch "1", gesetzt ist, wenn auf dieser eine der jeweiligen Übertragungs-Klasse entsprechende Übertragungskapazität noch zur Verfügung steht. Die Aktualisierung der einer ATM-Einzelverbindungsleitung zugeordneten Bits in den einzelnen Speicherzellen SZ1 bis SZk erfolgt dabei, wie im folgenden noch erläutert werden wird, mit jedem Aufbau bzw. Abbau einer virtuellen Verbindung und damit bei jeder Änderung des momentanen Verkehrsaufkommens auf der jeweiligen ATM-Einzelverbindungsleitung.

Erhält nun der Prozesssor PR der zentralen Steuereinrichtung ZST (Figur 1) von einer der Auswerteeinrichtungen AE her den Aufbau einer virtuellen Verbindung fordernde Signalisierungszellen zugeführt, so ermittelt dieser zunächst anhand des in den Signalisierungszellen enthaltenen Spitzenbitratenwertes und des mittleren Bitratenwertes die in Frage kommende Verbindungs-Klasse. Entsprechend der ermittelten Verbindungs-Klasse wird dann innerhalb des Speicherbereichs SBO der Speicheranordnung SP (Figur 2) diejenige Speicherzelle (SZ1 bis SZk) für die Durchführung eines Abfragezyklus angesteuert, die der der gerade ermittelten Verbindungs-Klasse entsprechenden Übertragungs-Klasse entspricht. Im Zuge des sich anschließenden Abfragezyklus werden dann nach Maßgabe eines festgelegten Abfragemodus sämtliche Bits der adressierten Speicherzelle hinsichtlich des Vorhandenseins des festgelegten Binärwertes (logisch "1") abgefragt. Ein solcher Abfragemodus kann beispielsweise darin bestehen, daß sämtliche Bits der adressierten Speicherzelle in einer festgelegten Reihenfolge nacheinander abgefragt werden. Dabei wird beispielsweise für die gerade einzurichtende virtuelle Verbindung die erste der ATM-Einzelverbindungsleitungen ausgewählt, deren zugeordnetes Bit auf den festgelegten Binärwert gesetzt ist. Wird dagegen im Zuge des Abfragezyklus für keines der Bits der festgelegte Binärwert ermittelt, so wird die gerade einzurichtende virtuelle Verbindung von dem Prozessor PR der zentralen Steuereinrichtung ZST zurückgewiesen.

Die gerade beschriebenen Steuerungsvorgänge für das Einrichten einer virtuellen Verbindung innerhalb des ATM-Verbindungsleitungsbündels LB1 wiederholen sich in der zentralen Steuereinrichtung ZST für jede virtuelle Verbindung, die über das ATM-Verbindungsleitungsbündel LB1 einzurichten ist. Darüber hinaus laufen den erläuterten Steuerungsvorgängen entsprechende Steuerungsvorgänge auch dann ab, wenn über die übrigen mit der ATM-Vermittlungseinrichtung VE (Figur 1) ver-bundenen ATM-Verbindungsleitungsbündel LB2 bis LBm virtuelle Verbindungen einzurichten sind.

Im übrigen können aufeinanderfolgende Abfragezyklen in ein und derselben Speicherzelle des beispielsweise dem ATM-Verbindungsleitungsbündel LB1 zugeordneten Speicherbereiches SBO bei dem als Beispiel angenommenen Abfragemodus so ablaufen, daß die Abfragen der einzelnen Bits der jeweiligen Speicherzelle in aufeinanderfolgenden Abfragezyklen mit festem Nullpunkt, d.h. mit demselben Bit beginnend, und gleichbleibender Reihenfolge durchgeführt werden. Die Abfragen können aber auch in anderer Weise durchgeführt werden, z. B. Abfragen mit variabler Nullstellung und/oder mit variabler Reihenfolge. Bei einer variablen Nullstellung kann die Abfrage der Bits einer Speicherzelle innerhalb eines Abfragezyklus beispielsweise mit demjenigen Bit beginnen, welches auf das im unmittelbar vorangegangenen Abfragezyklus zuletzt abgefragte Bit folgt. Mit anderen Worten die Abfrage im Zuge eines Abfragezyklus innerhalb einer Speicherzelle beginnt beispielsweise mit der ATM-Einzelverbindungsleitung, welche auf diejenige ATM-Einzelverbindungsleitung folgt, die im Zuge des unmittelbar vorangegangenen Abfragezyklus für das Einrichten einer virtuellen Verbindung in dem ATM-Verbindungsleitungsbündel LB1 ausgewählt worden ist. Damit wird eine gleichmäßige Auslastung der einzelnen zu diesen ATM-Verbindungsleitungsbündel gehörenden ATM-Einzelverbindungsleitungen erreicht.

Die oben erwähnte Aktualisierung der den einzelnen ATM-Einzelverbindungsleitungen A1 bis AL des ATM-Verbindungsleitungsbündels LB1 zugeordneten Bits in dem Speicherbereich SBO der Speicheranordnung SP (Figur 2) wird nachfolgend am Beispiel der ATM-Einzelverbindungsleitung A1 erläutert. Dabei wird als Beispiel davon ausgegangen, daß auf dieser ATM-Einzelverbindungsleitung ein statistisches Multiplexen von Nachrichtenzellen vorgesehen ist. Die dem Prozessor PR der zentralen Steuereinrichtung im Zuge des Aufbaus von virtuellen Verbindungen übermittelten Spitzenbitratenwerte und mittleren Bitratenwerte werden bei einem erfolgreichen Verbindungsaufbau über die ATM-Einzelverbindungsleitung A1 verbindungsindividuell gespeichert. Dafür stehen in dem der ATM-Einzelverbindungsleitung A1 zugeordneten Speicherbereich SB1 (Figur 2) mit V1 bis Vp bezeichnete Speicherzellen zur Verfügung, die den möglichen p eingerichteten virtuellen Verbindungen individuell zugeordnet sind. Der Prozessor PR der zentralen Steuereinrichtung ZST bildet nun einerseits einen Teilsummenwert aus den in den Speicherzellen V1 bis Vp möglicherweise gespeicherten mittleren Bitratenwerten, d.h. der Prozessor PR summiert die als Parameter MBR1 bis MBRp in den Speicherzellen V1 bis Vp gespeicherten mittleren Bitratenwerte auf. Dieser Teilsummenwert wird in der mit TS(1) bezeichneten Speicherzelle des Speicherbereiches SB1 gespeichert und mit jedem Aufbau bzw. Auslösen einer virtuellen Verbindung durch Addieren bzw. Subtrahieren des in Frage kommenden Parameters aktualisiert.

Andererseits bildet der Prozessor PR für jede bestehende virtuelle Verbindung einen Produktwert aus dem mittleren Bitratenwert und der Differenz zwischen dem Spitzenbitratenwert und mittleren Bitratenwert, d.h. daß beispielsweise für die virtuelle Verbindung, der die Speicherzelle V1 zugeordnet ist, ein Produktwert aus dem Parameter MBR1 und der Differenz der Parameter SBR1 und MBR1 gebildet wird. Die einzelnen Produktwerte werden dann zu einem Teilproduktsummenwert aufsummiert und in der mit TPR(1) bezeichneten Speicherzelle des Speicherbereiches SB1 gespeichert. Auch dieser Teilproduktsummenwert wird mit jedem Aufbau bzw. Auslösen einer virtuellen Verbindung auf der ATM-Einzelverbindungsleitung Al durch Addieren bzw. Subtrahieren des in Frage kommenden Produktwertes aktualisiert.

Auf eine Aktualisierung des Teilsummenwertes und des Teilproduktsummenwertes für die als Beispiel angenommene ATM-Einzelverbindungsleitung Al hin ermittelt dann der Prozessor PR ausgehend von dem maßgebenden Spitzenbitratenwert und mittleren Bitratenwert für die höchste der möglichen Übertragungs-Klassen, ob wenigstens eine neue virtuelle Verbindung für die betreffende Übertragungs-Klasse eingerichtet werden kann. Der Prozessor PR addiert hierzu den mittleren Bitratenwert für die betreffende Übertragungs-Klasse zu dem für die ATM-Einzelverbindungsleitung Al bereits gespeicherten Teilsummenwert, d. h. es wird ein Gesamtsummenwert gebildet. Außerdem wird in der oben angegebenen Weise für die betreffende Übertragungs-Klasse ein Produktwert ermittelt, der für die Bildung eines Gesamtproduktsummenwertes zu dem bereits gespeicherten Teilproduktsummenwert addiert wird. Der Prozessor PR bildet dann aus dem so gewonnenen Gesamtproduktsummenwert einen Quadratwurzelwert und multipliziert diesen mit einem Vergrößerungsfaktor. Zu dem daraus resultierenden Zwischenergebnis wird anschließend der zuvor erwähnte Gesamtsummenwert addiert. Als Ergebnis steht dann ein Vergleichswert zur Verfügung, der mit einem festgelegten Übertragungsbitratenwert verglichen wird, der der maximal möglichen Übertragungsbitrate auf der ATM-Einzelverbindungsleitung Al entspricht. Ist nun dieser übertragungsbitratenwert größer oder gleich dem gerade ermittelten Vergleichswert, so wird in der der gerade berücksichtigten übertragungs-Klasse zugeordneten Speicherzelle (SZ1 bis SZk in Figur 2) sowie in den Speicherzellen, die niedrigeren Übertragungs-Klassen zugeordnet sind, jeweils das der ATM-Einzelverbindungsleitung Al zugeordnete Bit auf den festgelegten Binärwert (logisch "1") gesetzt. Damit sind dann für diese ATM-Einzelverbindungsleitung alle diejenigen Übertragungs-Klassen markiert, für welche eine virtuelle Verbindung einrichtbar ist, und die Aktualisierungen des Speicherbereiches SBO des Speichers SP für die ATM-Einzelverbindungsleitung A1 abgeschlossen.

Wird dagegen der zuvor erwähnte festgelegte Übertragungsbitratenwert durch den gerade gebildeten Vergleichswert überschritten, so wiederholt der Prozessor PR die für die Bildung eines Vergleichswertes erforderlichen Steuerungsvorgänge unter Berücksichtigung der gegenüber der zuvor erwähnten Übertragungs-Klasse nächst niedrigeren Übertragungs-Klasse. Dies wird gegebenenfalls solange fortgesetzt, bis von dem Prozessor PR ein Vergleichswert ermittelt wird, der kleiner oder gleich dem für die ATM-Einzelverbindungsleitung A1 festgelegten Übertragungsbitratenwert ist. Sollte sich jedoch ein solcher Vergleichswert nicht ergeben, so wird keines der der ATM-Einzelverbindungsleitung A1 zugeordneten Bits in dem Speicherbereich SBO auf den festgelegten Binärwert gesetzt. Dies bedeutet, daß dann über diese ATM-Einzelverbindungsleitung momentan keine weitere virtuelle Verbindung einrichtbar ist.

Bei der zuvor erläuterten Ermittlung eines Vergleichswertes wurde davon ausgegangen, daß aufgrund der Festlegung der einzelnen Übertragungs-Klassen für sämtliche Übertragungs-Klassen hinsichtlich ihrer Wertigkeit eine Reihenfolge festlegbar ist. Je nach der Festlegung der einzelnen Übertragungs-Klassen kann sich jedoch ergeben, daß für die Übertragungs-Klassen unterschiedliche Gruppen zu bilden sind, in denen jeweils eine Reihenfolge der Übertragungs-Klassen festlegbar ist. So kann beispielsweise für jeden der für die Übertragungs-Klassen maßgebenden Spitzenbitratenwerte eine gesonderte Gruppe von Übertragungs-Klassen vorgesehen sein. Innerhalb der jeweiligen Gruppe ist dann für die in Frage kommenden Übertragungs-Klassen nach Maßgabe der für diese festgelegten mittleren Bitratenwerte eine Reihenfolge hinsichtlich der Wertigkeit festgelegt. Für die einzelnen Gruppen ist dann nacheinander jeweils gesondert ein oben erwähnter Vergleichswert zu bilden.

Die gerade am Beispiel der ATM-Einzelverbindungsleitung A1 erläuterten Steuerungsvorgänge für die Aktualisierung des Speicherbereiches SBO (Figur 2) laufen auch für die übrigen ATM-Einzelverbindungsleitungen des ATM-Verbindungsleitungsbündels LB1 ab, falls sich auf diesen ATM-Einzelverbindungsleitungen das momentane Verkehrsaufkommen durch Aufbau bzw. Abbau von virtuellen Verbindungen ändert.

Den gerade erläuterten Steuerungsvorgängen entsprechende Steuerungsvorgänge sind darüber hinaus auch für die Aktualisierung von Speicherbereichen bzw. Speichern vorgesehen, die den übrigen in Figur 1 dargestellten ATM-Verbindungsleitungsbündeln LB2 bis LBm zugeordnet sind.

Anstelle der vorstehend beschriebenen Ermittlung eines Vergleichswertes für die Überprüfung der Zulässigkeit des Einrichtens einer virtuellen Verbindung über eine ATM-Einzelverbindungsleitung können auch anderweitige Kriterien für die Ermittlung eines Vergleichswertes herangezogen werden können. So ist es beispielsweise möglich, daß für die Ermittlung eines Vergleichswertes lediglich die für die einzelnen virtuellen Verbindungen angemeldeten Spitzenbitratenwerte berücksichtigt werden. In diesem Falle kann aus den Spitzenbitratenwerten der über eine ATM-Einzelverbindungsleitung momentan eingerichteten virtuellen Verbindungen ein Teilsummenwert gebildet und in einem der betreffenden ATM-Einzelverbindungsleitung zugeordneten Speicherbereich der in Figur 2 dargestellten Speicheranordnung SP zwischengespeichert werden. D. h. für jede der über die betreffende ATM-Einzelverbindungsleitung eingerichteten Verbindungen wird eine dem jeweils angemeldeten Spitzenbitratenwert entsprechende Übertragungsbitrate reserviert. Bei einer aufgrund eines geänderten Verkehrsaufkommens erforderlichen Aktualisierung dieses Teilsummenwertes kann dann zu dem aktualisierten Teilsummenwert der für eine der festgelegten Übertragungs-Klassen maßgebende Spitzenbitratenwert addiert werden. Der daraus resultierende Gesamtsummenwert stellt dabei einen Vergleichswert dar, der anstelle des oben erwähnten Vergleichswertes für den von dem Prozessor PR durchzuführenden Vergleich herangezogen wird.

Es sei noch darauf hingewiesen, daß zwar vorstehend die Auswahl einer ATM-Einzelverbindungsleitung innerhalb eines ATM-Verbindungsleitungsbündels am Beispiel einer ATM-Vermittlungseinrichtung erläutert wurde. Eine solche zuvor beschriebene Auswahl mit Hilfe einer dem jeweiligen ATM-Verbindungsleitungsbündel zugeordneten Speicheranordnung kann jedoch auch allgemein in ATM-Kommunikationseinrichtungen eines ATM-Netzes vorgenommen werden, wenn von diesen aus virtuelle Verbindungen über wenigstens ein ATM-Verbindungsleitungsbündel zu führen sind. Als Beispiel für derartige ATM -Kommunikationseinrichtungen seien hier mit Endgeräten verbundene ATM-Schnittstelleneinrichtungen, ATM-Konzentratoren und ATM-Multiplexeinrichtungen genannt.

Außerdem sei noch darauf hingewiesen, daß zwar vorstehend für die Auswahl einer ATM-Einzelverbindungsleitung innerhalb eines ATM-Verbindungsleitungsbündels Angaben bezüglich der auf den einzelnen ATM-Einzelverbindungsleitungen noch zur Verfügung stehenden Übertragungskapazitäten in einer dem jeweiligen ATM-Verbindungsleitungsbündel zugeordneten Speicheranordnung gespeichert sind. Es kann jedoch allgemein so vorgegangen sein, daß für die einzelnen ATM-Einzelverbindungsleitungen eines ATM-Verbindungsleitungsbündels individuell Leitungsangaben bezüglich aller diejenigen Übertragungs-Klassen festgehalten werden, für welche aufgrund der momentan verfügbaren freien Übertragungskapazität auf der jeweiligen ATM-Einzelverbindungsleitung wenigstens noch eine virtuelle Verbindung einrichtbar ist. Anhand dieser individuellen Leitungsangaben erfolgt dann im Zuge des Aufbaus einer virtuellen Verbindung eine Auswahl einer ATM-Einzelverbindungsleitung bzw. bei einer Änderung des Verkehrsaufkommens auf einer der ATM-Einzelverbindungsleitungen eine Aktualisierung der diese betreffenden Leitungsangaben.

## Patentansprüche

1. Verfahren zum Einrichten von virtuellen Verbindungen über wenigstens ein für einen asynchronen Transfermodus ausgelegtes, ATM-Kommunikationseinrichtungen miteinander verbindendes ATM-Verbindungsleitungsbündel (z.B. LB1), welches aus einer Mehrzahl von ATM Einzelverbindungsleitungen (A1,...,AL) gebildet ist, durch eine der mit dem jeweiligen ATM-Verbindungsleitungsbündel verbundenen ATM-Kommunikationseinrichtungen (VE) nach Maßgabe der für die einzurichtenden virtuellen Verbindungen angemeldeten charakteristischen Parameter und der auf den ATM-Einzelverbindungsleitungen jeweils noch verfügbaren freien Übertragungskapazität,
**dadurch gekennzeichnet,**
daß die für einzurichtende virtuelle Verbindungen angemeldeten charakteristischen Parameter auf Größenbereiche der Parameter sich beziehenden Verbindungs-Klassen zugeordnet werden,
daß für die ATM-Einzelverbindungsleitungen (A1,...,AL) des jeweiligen ATM-Verbindungsleitungsbündels (z.B. LB1) den Verbindungs-Klassen entsprechende Übertragungs-Klassen festgelegt werden,
daß für die betreffenden ATM-Einzelverbindungsleitungen (A1,..., AL) jeweils individuell Leitungsangaben bezüglich aller derjenigen Übertragungs-Klassen festgehalten werden, für welche aufgrund der momentan verfügbaren freien Übertragungskapazität auf der jeweiligen ATM-Einzelverbindungsleitung wenigstens eine virtuelle Verbindung einrichtbar ist, und
daß bei Vorliegen einer Anforderung zum Einrichten einer virtuellen Verbindung im Zuge eines die Leitungsangaben sämtlicher ATM-Einzelverbindungsleitungen einbeziehenden Suchvorganges eine der ATM-Einzelverbindungsleitungen für das Einrichten der jeweiligen virtuellen Verbindung ausgewählt wird, aus deren Leitungsangaben eine Übertragungs-Klasse hervorgeht, die der bei der gerade einzurichtenden virtuellen Verbindung zu berücksichtigenden Verbindungs-Klasse entspricht.

2. Verfahren nach Anspruch 1,
**dadurch gekennzeichnet**,
daß als charakteristische Parameter für die einzelnen virtuellen Verbindungen Spitzenbitratenwerte bzw. mittlere Bitratenwerte und Spitzenbitratenwerte angemeldet werden.

3. Verfahren nach Anspruch 2,
**dadurch gekennzeichnet,**
daß Verbindungs-Klassen bzw. Übertragungs-Klassen festgelegt werden, die sich durch unterschiedliche mittlere Bitratenwerte und/oder durch unterschiedliche Spitzenbitratenwerte voneinander unterscheiden.

4. Verfahren nach Anspruch 2 oder 3,
**dadurch gekennzeichnet**,
daß ausgehend von der durch bereits eingerichtete virtuelle Verbindungen bereits belegten Übertragungskapazität auf den einzelnen ATM-Einzelverbindungsleitungen (A1,...AL) mit jedem Einrichten einer virtuellen Verbindung bzw. Aufheben einer eingerichteten virtuellen Verbindung auf der in Frage kommenden ATM-Einzelverbindungsleitung die noch freie, für neue virtuelle Verbindungen verfügbare Übertragungskapazität dadurch für die einzelnen Übertragungsklassen aktualisiert wird, daß für die jeweilige ATM-Einzelverbindungsleitung nach Maßgabe der angemeldeten Spitzenbitratenwerte bzw. nach Maßgabe der angemeldeten mittleren Bitratenwerte und Spitzenbitratenwerte sämtlicher über die jeweilige ATM-Einzelverbindungsleitung bereits eingerichteter virtueller Verbindungen und nach Maßgabe des der jeweiligen Übertragungs-Klasse entsprechenden Spitzenbitratenwertes bzw. mittleren Bitratenwertes und Spitzenbitratenwertes ein Übertragungsbitratenwert gebildet wird und daß dann, wenn der ermittelte Übertragungsbitratenwert kleiner oder gleich einem für die ATM-Einzelverbindungsleitungen (A1,...AL) jeweils festgelegten maximalen Übertragungsbitratenwertes ist, in den Leitungsangaben für die jeweilige ATM-Einzelverbindungsleitung die jeweilige Übertragungs-Klasse festgehalten wird.

5. Verfahren nach Anspruch 4,
**dadurch gekennzeichnet**,
daß die Übertragungs-Klassen wenigstens einer Gruppe von Über tragungs-Klassen zugeordnet werden, in welcher eine Reihenfolge der zugehörigen Übertragungs-Klassen hinsichtlich der Wertigkeit festgelegt ist,
daß für die jeweilige Gruppe gesondert ein Übertragungsbitratenwert ermittelt wird,
daß für die Ermittlung eines Übertragungsbitratenwertes zunächst für die jeweilige Gruppe die höchste der zugehörigen übertragungs-Klassen berücksichtigt wird,
daß für den Fall, daß der so ermittelte Übertragungsbitratenwert kleiner oder gleich dem festgelegten maximalen Übertragungsbitratenwert ist, in den Leitungsangaben für die jeweilige ATM-Einzelverbindungsleitung (A1,...AL) die betreffende Übertragungs-Klasse und die gegenüber dieser niedrigeren Übertragungs-Klassen festgehalten werden
und daß bei einem Überschreiten des maximalen Übertragungsbitratenwertes durch den gerade ermittelten Übertragungsbitratenwert die Ermittlung eines Übertragungsbitratenwertes mit wenigstens einer gegenüber der betreffenden Übertragungs-Klasse niedrigeren Übertragungs-Klasse der jeweiligen Gruppe wiederholt wird, bis ein Übertragungsbitratenwert ermittelt wird, der kleiner oder gleich dem maximalen Übertragungsbitratenwert ist.

6. Verfahren nach Anspruch 4 oder 5,
**dadurch gekennzeichnet**,
daß für die Ermittlung eines Übertragungsbitratenwertes für die jeweilige ATM-Einzelverbindungsleitung (A1,...AL) mit jedem Einrichten bzw. Aufheben einer virtuellen Verbindung einerseits ein aus den mittleren Bitratenwerten sämtlicher eingerichteter virtueller Verbindungen gebildeter Summenwert und andererseits ein Produktsummenwert aktualisiert wird, in welchem für jede der bestehenden virtuellen Verbindungen ein Produktwert aus dem mittleren Bitratenwert und der Differenz zwischen dem Spitzenbitratenwert und dem mittleren Bitratenwert enthalten ist,
daß der betreffende Summenwert bzw. Produktsummenwert um den mittleren Bitratenwert bzw. um einen den in dem Produktsummenwert enthaltenen Produktwerten entsprechenden Produktwert der für die Ermittlung des Übertragungsbitratenwertes zu berücksichtigenden Übertragungs-Bitratenklasse erweitert wird
und daß ein mit einem Vergrößerungsfaktor multiplizierter Quadratwurzelwert des erweiterten Produktsummenwertes zu dem erweiterten Summenwert addiert wird.

7. Schaltungsanordnung für eine ATM-Kommunikationseinrichtung (VE) zum Einrichten von virtuellen Verbindungen über wenigsten ein für einen asynchronen Transfermodus ausgelegtes, die betreffende ATM-Kommunikationseinrichtung mit einer weiteren ATM-Kommunikationseinrichtung miteinander verbindendes ATM-Verbindungsleitungsbündel (z. B. LB1), welches aus einer Mehrzahl von ATM-Einzelverbindungsleitungen (A1 bis AL) gebildet ist, nach Maßgabe der für die einzurichtenden virtuellen Verbindungen angemeldeten charakteristischen Parameter und der auf den ATM-Einzelverbindungsleitungen jeweils noch verfügbaren freien Übertragungskapazität,
**dadurch gekennzeichnet**,
daß Mittel für eine Zuordnung der für einzurichtende virtuelle Verbindungen angemeldeten charakteristischen Parameter zu auf Größenbereiche der Parameter sich beziehende Verbindungs-Klassen vorgesehen sind,
daß dem jeweiligen ATM-Verbindungsleitungsbündel (z. B. LB1) Speichermittel (SP) mit einer Mehrzahl von Speicherzellen (SZ1 bis SZk) zugeordnet sind,
daß die Speicherzellen individuell den Verbindungs-Klassen entsprechenden Übertragungs-Klassen zugeordnet sind,
daß innerhalb der jeweiligen Speicherzelle (z. B. SZ1) jeder der zu dem jeweiligen ATM-Verbindungsleitungsbündel (z. B. LB1) gehörenden ATM-Einzelverbindungsleitungen (Al bis AL) ein gesonderter Speicherplatz (PA1, ..., PAL) zugeordnet ist,
daß in einem solchen gesonderten Speicherplatz einer Speicherzelle immer dann eine festgelegte Markierungsinformation eintragbar ist, wenn über die dem jeweiligen Speicherplatz zugeordnete ATM-Einzelverbindungsleitung aufgrund der noch vorhandenen freien Übertragungskapazität wenigstens noch eine virtuelle Verbindung der der jeweiligen Speicherzelle zugeordneten Übertragungs-Klasse einrichtbar ist,
daß die Speicherzellen (SZ1,..., SZk) bei Vorliegen einer Anforderung zum Einrichten von virtuellen Verbindungen nach Maßgabe der der jeweiligen virtuellen Verbindung zugeordneten Verbindungs-Klasse individuell ansteuerbar sind
und daß Mittel vorgesehen sind für eine Auswertung der einer gerade angesteuerten Speicherzelle (z. B. SZ1) zugehörigen Speicherplätze (PA1,..., PAL) hinsichtlich des Vorhandenseins der festgelegten Markierungsinformation und für eine Auswahl einer der ATM-Einzelverbindungsleitungen für das Einrichten einer virtuellen Verbindung, in deren zugeordnetem Speicherplatz die festgelegte Markierungsinformation eingetragen ist.

## Claims

1. Method for setting up virtual connections via at least one ATM trunk group (for example LB1), which is configured for an asynchronous transfer mode, connects ATM communication devices to one another and is formed from a plurality of individual ATM trunks (A1,...,AL), by means of one of the ATM communication devices (VE), connected to the respective ATM trunk group, in accordance with the characteristic parameters reported for the virtual connections to be set up and the free transmission capacity still respectively available on the individual ATM trunks, characterized in that the characteristic parameters reported for the virtual connections to be set up are assigned to connection classes which relate to size ranges of the parameters, in that transmission classes corresponding to the connection classes are defined for the individual ATM trunks (A1,...,AL) of the respective ATM trunk group (for example, LB1), in that trunk information relating to all those transmission classes for which at least one virtual connection can be set up on the basis of the presently available free transmission capacity on the respective individual ATM trunk is stored, in each case individually, for the relevant individual ATM trunks (A1,...,AL), and in that when a request for setting up a virtual connection is present, one of the individual ATM trunks is selected for setting up the respective virtual connection in the course of a search process which includes the trunk information of all the individual ATM trunks, a transmission class, which corresponds to the connection class to be taken into account during the virtual connection which is about to be set up, being identified from the trunk information of the said virtual connection.

2. Method according to Claim 1, characterized in that peak bit rate values or average bit rate values and peak bit rate values are reported as characteristic parameters for the individual virtual connections.

3. Method according to Claim 2, characterized in that connection classes or transmission classes which are distinguished from one another by means of different average bit rate values and/or by means of different peak bit rate values are defined.

4. Method according to Claim 2 or 3, characterized in that on the basis of the transmission capacity on the individual ATM trunks (A1,..AL) which has already been siezed by virtual connections which have already been set up, whenever a virtual connection is set up or a set-up virtual connection is cleared on the individual ATM trunk in question, the transmission capacity still free and available for new virtual connections is updated for the individual transmission classes by forming a transmission bit rate value for the respective individual ATM trunk in accordance with the reported peak bit rate values or in accordance with the reported average bit rate values and peak bit rate values of all the virtual connections already set up via the respective individual ATM trunk and in accordnace with the peak bit rate value or average bit rate value and peak bit rate value corresponding to the respective transmission class, and in that when the identified transmission bit rate value is smaller than or equal to a maximum transmission bit rate value respectively defined for the individual ATM trunks (A1, .. AL), the respective transmission class is stored in the trunk information for the respective individual ATM trunk.

5. Method according to Claim 4, characterized in that the transmission classes are assigned to at least one group of transmission classes in which a series of the associated transmission classes is defined on the basis of the weighting, in that a transmission bit rate value is identified separately for the respective group, in that initially the maximum of the associated transmission classes is taken into account for the identification of a transmission bit rate value for the respective group, in that in the event of the transmission bit rate value identified in this way being smaller than or equal to the defined maximum transmission bit rate value, the relevant transmission class and the transmission classes which are lower in comparison with it are stored in the trunk information for the respective individual ATM trunk (A1,...AL), and in that when the maximum transmission bit rate value is exceeded by the transmission bit rate value just identified, the identification of a transmission bit rate value is repeated with at least one transmission class, which is lower in comparison with the relevant transmission class, of the respective group until a transmission bit rate value is identified which is smaller than or equal to the maximum transmission bit rate value.

6. Method according to Claim 4 or 5, characterized in that, for the identification of a transmission bit rate value for the respective individual ATM trunk (A1,...AL), whenever a virtual connection is set up or cleared on the one hand a total value which is formed from the average bit rate values of all the virtual connections set up and on the other hand a product total value, in which a product value formed from the average bit rate value and the difference between the peak bit rate value and the average bit rate value is contained for each of the existing virtual connections, is updated, in that the relevant total value or product total value is expanded by the average bit rate value or by a product value, corresponding to the product values contained in the product total value, of the transmission bit rate class which is to be taken into account for the identification of the transmission bit rate value, and in that a square root value, multiplied by an enlargement factor, of the expanded product total value is added to the expanded sum value.

7. Circuit arrangement for an ATM communication device (VE) for setting up virtual connections via at least one ATM trunk group (for example, LB1) which is configured for an asynchronous transfer mode, connects the relevant ATM communication device to a further ATM communication device and is formed from a plurality of individual ATM trunks (A1 to AL), in accordance with the characteristic parameters reported for the virtual connections to be set up and the free transmission capacity still respectively available on the individual ATM trunks, characterized in that means for assigning the characteristic parameters reported for virtual connections to be set up to connection classes which relate to size ranges of the parameters are provided, in that memory means (SP) with a plurality of memory cells (SZ1 to SZk) are assigned to the respective ATM trunk group (for example, LB1), in that the memory cells are individually assigned to the connection classes in accordance with transmission classes, in that, within the respective memory cell (for example, SZ1), each of the individual ATM trunks (A1 to AL) associated with the respective ATM trunk group (for example, LB1) is assigned a separate memory location (PA1,..., PAL), in that a defined item of marking information can be entered in such a separate memory location of a memory cell whenever at least still one virtual connection of the transmission class assigned to the respective memory cell can be set up via the individual ATM trunk assigned to the respective memory location on the basis of the free transmission capacity still present, in that, when a request for setting up virtual connections in accordance with the connection class assigned to the respective virtual connection is present the memory cells (SZ1,..., SZk) can be actuated individually, and in that means are provided for evaluating the memory locations (PA1,..., PAL), assigned to a memory cell (for example, SZ1) just actuated, with respect to the presence of the defined item of marking information, and for a selection of one of the individual ATM trunks for setting up a virtual connection in whose assigned memory location the defined item of marking information is entered.

## Revendications

1. Procédé d'établissement de communications virtuelles par l'intermédiaire d'au moins un faisceau (par exemple LB1) de circuits de jonction ATM, qui relie l'un à l'autre des dispositifs de communication ATM, qui est prévu pour un mode de transfert asynchrone et qui est formé d'une pluralité de circuits (A1,..., AL) de jonction individuels ATM, par un des dispositifs (VE) de communication ATM reliés au faisceau de circuits de jonction ATM en fonction des paramètres caractéristiques déclarés pour les communications virtuelles à établir et de la capacité de transmission libre encore disponible sur les circuits de jonction individuels ATM,
caractérisé en ce que
on associe les paramètres caractéristiques déclarés pour des communications virtuelles à établir à des classes de communication se rapportant à des domaines de grandeur des paramètres,
on fixe pour les circuits (A1, ..., AL) de jonction individuels ATM du faisceau (par exemple LB1) de circuits de jonction ATM des classes de transmission correspondant aux classes de communication,
on maintient, individuellement pour les circuits (A1, ..., AL) de jonction ATM individuels concernés, des indications de circuit concernant toutes les classes de transmission, pour lesquelles on peut établir au moins une communication virtuelle sur le circuit de jonction ATM individuel concerné sur la base de la capacité de transmission libre disponible instantanément, et
on sélectionne, en présence d'une demande d'établissement d'une communication virtuelle au cours d'une opération de recherche englobant les indications de circuit de tous les circuits de jonction ATM individuels, l'un des circuits de jonction ATM individuels pour l'établissement de la communication virtuelle, des indications de circuit de laquelle provient une classe de transmission, qui correspond à la classe de communication dont il faut tenir compte pour la communication virtuelle justement à établir.

2. Procédé suivant la revendication 1,
caractérisé en ce que
on déclare, comme paramètres caractéristiques pour les diverses communications virtuelles, des valeurs de débit binaire de pointe ou des valeurs moyennes de débit binaire et des valeurs de débit binaire de pointe.

3. Procédé suivant la revendication 2,
caractérisé en ce que
on fixe des classes de communication ou des classes de transmission, qui se distinguent les unes des autres par des valeurs moyennes différentes de débit binaire et/ou par des valeurs différentes de débit binaire de pointe.

4. Procédé suivant la revendication 2 ou 3,
caractérisé en ce que
on met à jour, à partir de la capacité de transmission déjà occupée par des communications virtuelles déjà établies, sur les divers circuits (A1, ..., AL) de jonction ATM individuels, à chaque établissement d'une communication virtuelle ou suppression d'une communication virtuelle établie sur le circuit de jonction ATM individuel en question la capacité de transmission encore libre et disponible pour de nouvelles communications virtuelles, pour les diverses classes de transmission, en formant pour le circuit de jonction ATM individuel, en fonction des valeurs déclarées de débit binaire de pointe ou en fonction des valeurs moyennes déclarées de débit binaire et de valeurs déclarées de débit binaire de pointe de toutes les communications virtuelles déjà établies par l'intermédiaire du circuit de jonction ATM individuel considéré et en fonction de la valeur de débit binaire de pointe ou de la valeur moyenne de débit binaire et de la valeur de débit binaire de pointe, correspondant à la classe de transmission considérée, une valeur de débit binaire de transmission et on maintient, lorsque la valeur déterminée de débit binaire de transmission est inférieure ou égale à une valeur de débit binaire de transmission maximum fixée pour les circuits de jonction ATM individuels (A1, ..., AL), la classe de transmission considérée dans les indications de circuit pour le circuit de jonction ATM individuel considéré.

5. Procédé suivant la revendication 4,
caractérisé en ce que
on associe les classes de transmission à au moins un groupe de classes de transmission, dans lequel un ordre de poids des classes de transmission associées est fixé,
on détermine de manière distincte pour le groupe une valeur du débit binaire de transmission,
on tient compte de la plus haute des classes associées de transmission pour le calcul d'une valeur de débit binaire de transmission d'abord pour le groupe considéré,
dans le cas où la valeur de débit binaire de transmission ainsi calculée est inférieure ou égale à la valeur maximum fixée de débit binaire de transmission, on maintient, dans les indications de circuit pour le circuit (A1, ..., AL) de jonction ATM individuel considéré, la classe de transmission concernée et les classes de transmission plus basses que celle-ci,
et lorsque la valeur justement déterminée de débit binaire de transmission est plus grande que la valeur maximum de débit binaire de transmission, on répète la détermination d'une valeur de débit binaire de transmission avec au moins une classe de transmission du groupe plus basse que la classe de transmission concernée, jusqu'à ce que l'on détermine une valeur de débit binaire de transmission, qui soit inférieure ou égale à la valeur maximum de débit binaire de transmission.

6. Procédé suivant la revendication 4 ou 5,
caractérisé en ce que l'on met à jour, pour la détermination d'une valeur de débit binaire de transmission pour le circuit (A1, ..., AL) de jonction ATM individuel considéré, à chaque établissement ou suppression d'une communication virtuelle, d'une part une valeur cumulée formée à partir des valeurs moyennes de débit binaire de toutes les communications virtuelles établies et d'autre part une valeur cumulée de produit, qui contient pour chacune des communications virtuelles établies une valeur de produit de la valeur moyenne de débit binaire et de la différence entre la valeur de débit binaire de pointe et la valeur moyenne de débit binaire,
on ajoute à la valeur cumulée concernée ou à la valeur cumulée de produit concerné la valeur moyenne de débit binaire ou une valeur de produit, correspondant aux valeurs de produit contenues dans la somme cumulée de produit, de la classe de débit binaire de transmission dont il faut tenir compte pour la détermination de la valeur de débit binaire de transmission
et on additionne à la valeur cumulée augmentée la racine carrée, multipliée par un facteur d'agrandissement, de la valeur cumulée augmentée de produit.

7. Montage pour un dispositif (VE) de communication ATM, destiné à établir des communications virtuelles par l'intermédiaire d'au moins un faisceau (par exemple LB1) de circuits de jonction ATM, qui est prévu pour un mode de transfert asynchrone, qui relie le dispositif de communication ATM concerné à un autre dispositif de communication ATM et qui est formé d'une pluralité de circuits (A1 à AL) de jonction ATM individuels, en fonction des paramètres caractéristiques déclarés pour les communications virtuelles à établir et de la capacité de transmission libre encore disponible sur les circuits de jonction ATM individuels,
caractérisé en ce que
des moyens d'association des paramètres caractéristiques déclarés pour les communications virtuelles à établir à des classes de communication se rapportant à des domaines de grandeur des paramètres sont prévus,
des moyens (SP) de mémorisation comportant une pluralité de cellules (SZ1 à SZk) de mémoire sont associés au faisceau considéré (par exemple LB1) de circuits de jonction ATM,
les cellules de mémoire sont associées individuellement à des classes de transmission correspondant aux classes de communication,
un emplacement de mémoire (PA1, ..., PAL) distinct est associé, dans la cellule de mémoire considérée (par exemple SZ1) à chacun des circuits (A1 à AL) de jonction ATM individuel appartenant au faisceau (par exemple LB1) de circuits de jonction ATM considéré,
une information fixée de repérage peut être introduite dans un emplacement de mémoire distinct de ce genre d'une cellule de mémoire, chaque fois qu'au moins encore une communication virtuelle de la classe de transmission associée à la cellule de mémoire considérée peut être établie par l'intermédiaire du circuit de jonction ATM individuel associé à l'emplacement de mémoire considéré, sur la base de la capacité de transmission libre existant encore,
les cellules (SZ1, ..., SZk) de mémoire peuvent être commandées individuellement, en présence d'une demande d'établissement de communications virtuelles en fonction de la classe de communication associée à la communication virtuelle considérée
et des moyens sont prévus pour exploiter les emplacements (PA1, ..., PAL) de mémoire appartenant à une cellule (par exemple SK1) de mémoire justement commandée du point de vue de la présence de l'information fixée de repérage et pour sélectionner l'un des circuits de jonction ATM individuels afin d'établir une communication virtuelle, dans l'emplacement de mémoire associé de laquelle l'information fixée de repérage est introduite.
